# EUROPÄISCHE PATENTSCHRIFT

(11) **EP 0 800 129 B1**
(45) Veröffentlichungstag und Bekanntmachung des Hinweises auf die Patenterteilung: **19.07.2000**
(21) Anmeldenummer: 97105469.7
(22) Anmeldetag: 02.04.1997
(51) Int. Cl.: G05B 19/418, G05D 1/02, B66F 9/075

(54) **Flurförderzeug, das wahlweise manuell oder automatisch betreibbar ausgebildet ist**
Industrial truck with manual or automatic mode
Chariot de manutention utilisable en mode manuel ou automatique

(30) Priorität: 03.04.1996 DE 19613386
(43) Veröffentlichungstag der Anmeldung: 08.10.1997
(73) Patentinhaber: FIAT OM CARRELLI ELEVATORI S.p.A., 20141 Milano (IT); Consorzio Telerobot, 16154 Genova (IT)
(72) Erfinder: Lanza, Fabrizio, 20063 Cernusco Sul Naviglio (IT); Livon, Guido, 33053 Latisana (IT); Masciangelo, Stefano, 16143 Genova (IT); Ilic, Marco, 42100 Reggio Emilia (IT); Bassino, Paolo, 17100 Savona (IT); Garibotto, Giovanni, 17019 Varazze (IT)
(74) Vertreter: Kasseckert, Rainer

(56) Entgegenhaltungen:
- EP-A- 0 335 196
- DE-A- 3 606 418
- DE-C- 3 037 221
- GB-A- 2 131 574
- US-A- 4 279 328
- US-A- 4 714 399
- US-A- 5 208 753
- PROCEEDINGS OF THE INTERNATIONAL SYMPOSIUM ON AUTOMOTIVE TECHNOLOGY AND AUTOMATION (ISATA), FLORENCE, MAY 20 - 24, 1991, Nr. SYMP. 24, 20.Mai 1991, NUCLEARE E DELLE ENERGIE ALTERNATIVE (ENEA), Seiten 615-622, XP000308659 PROBERT P J ET AL: "SENSORY BASED CAPABILITIES IN GUIDED VEHICLES FOR FACTORY AUTOMATION"
- IEEE TRANSACTIONS ON ROBOTICS AND AUTOMATION, Bd. 10, Nr. 5, 1.Oktober 1994, Seiten 710-716, XP000471450 MILLER R K ET AL: "A CAMERA SPACE CONTROL SYSTEM FOR AN AUTOMATED FORKLIFT"

## Beschreibung

Die Erfindung betrifft ein Flurförderzeug, insbesondere einen Gegengewichts-Gabelstapler, das wahlweise manuell oder automatisch betreibbar ist und mit einen Fahrantrieb, mit einer Lenkung, mit einer Bremsanlage und mit einer Gabel zur Handhabung von Paletten und darauf befindlichen Lasten versehen ist, wobei für den manuellen Betrieb der Fahrantrieb durch ein manuell erzeugtes Geschwindigkeitssignal steuerbar, die Lenkung manuell betätigbar und die Gabel manuell bedienbar ist.

Ein gattungsgemäßes, als Gabelstapler ausgebildetes Flurförderzeug ist in der DE 36 06 418 offenbart. Nähere Angaben zur Funktionsweise des Fahrzeugs im automatischen Betrieb sind dieser Druckschrift jedoch nicht entnehmbar.

Bekannt sind darüber hinaus sogenannte "Fahrerlose Transportsysteme". Unter diesen fahrerlos betriebenen Flurförderzeugen gibt es automatische Regalstapler, mit denen die aufgenommene Last sowohl vertikal als auch horizontal bewegbar ist. Die bekannten fahrerlosen Transportsysteme werden bevorzugt programmiert gesteuert. Hierzu ist es erforderlich, die aufzunehmende Last stets exakt in einer bestimmten räumlichen Lage anzuordnen. Im Hinblick auf die zu bewältigende Wegstrecke sind in der Mehrzahl Systeme eingesetzt, bei denen das Fahrzeug längs einer Spur geführt wird.

Zur Steuerung eines fahrerlosen Transportsystems ist in der Regel ein Zentralrechner vorgesehen, der das Fahrzeug gegebenenfalls unter Mitwirkung eines Bordrechners von außerhalb steuert, beispielsweise mittels Datenübertragung durch Funk. Fahrerlose Transportsysteme erfordern einen hohen Bauaufwand und sind aufgrund ihrer konstruktiven und steuerungstechnischen Ausrichtung im Gegensatz zu klassischen Gabelstaplern nicht universell einsetzbar.

In Proceedings of the international symposium on automotive technology and automation (ISATA), Florence, May 20-24, 1991, Nr. Symp 24, 20. Mai 1991, Seiten 615-622, Propert P. J. et al.: "Sensor based capabilities in guided vehicles for factory automation" ist ein fahrerloses Transportsystem beschrieben, das mit zusätzlichen Einrichtungen versehen ist, um bei Störungen an einer vorgegebenen bzw. ausgewählten Fahrstrecke, beispielsweise einer durch ein Hindernis vollständig oder teilweise versperrter Fahrstrecke, einen weiteren Betrieb des fahrerlosen Transportsystems zu ermöglichen. Hierzu ist das fahrerlose Transportsystem mit Sensoren und Steuereinrichtungen versehen, wodurch ein Hindernis auf der vorgegebene bzw. ausgewählte Fahrstrecke erfasst werden kann und eine Umplanung bzw. Neuplanung der Fahrstrecke ermöglicht wird. Bei einem derartigen fahrerlosen Transportfahrzeug wird die Transportaufgabe von einem übergeordneten Zentralrechner mittels Datenübertragung an einen Bordrechner des fahrerlosen Transportsystems überliefert, wobei in dem Bordrechner eine Fahrstrecke ausgewählt wird. Der Bordrechner steht mit den Sensoren und den Steuereinrichtungen in Wirkverbindung. Ein derartiges fahrerloses Transportsysteme weist eine hohe Verfügbarkeit auf, erfordert jedoch einen hohen Bauaufwand und ist aufgrund der konstruktiven und steuerungstechnischen Ausrichtung im Gegensatz zu klassischen Gabelstaplern nicht universell einsetzbar.

Der vorliegenden Erfindung liegt die Aufgabe zugrunde, ein Flurförderzeug der eingangs genannten Art zur Verfügung zu stellen, der mit möglichst geringem Aufwand sowohl manuell als auch automatisch betreibbar ist.

Diese Aufgabe wird erfindungsgemäß dadurch gelöst, daß das Flurförderzeug für den automatischen Betrieb mit einem in Wirkverbindung mit dem Fahrantrieb, der Lenkung, der Bremsanlage und der Bewegungssteuerung der Gabel bringbaren Kontrollsystem ausgestattet ist, das Mittel zum Eingeben und Speichern von möglichen Fahrtrouten und einer Transportaufgabe, Mittel zum autonomen Bestimmen der Fahrzeugposition im Raum, Mittel zur Steuerung der Bewegung des Fahrzeugs in Abhängigkeit von dessen Position im Raum und von der vorgegebenen Transportaufgabe, Mittel zum Erkennen des Vorhandenseins, der Position und der Ausrichtung einer Palette, Mittel zur Steuerung der Bewegung der Gabel und/oder des Fahrzeugs in Abhängigkeit von der Position, der Ausrichtung der Palette und der Transportaufgabe und Mittel zur Abbremsung des Fahrzeugs beim Vorhandensein von Hindernissen aufweist.

Das erfindungsgemäß ausgestaltete Flurförderzeug ist durch das bordeigene Kontrollsystem in der Lage, frei im Raum zu navigieren. In Abhängigkeit von der vorgegebenen Transportaufgabe und der festgestellten Fahrzeugposition im Raum vermag das Kontrollsystem unter den gespeicherten Fahrtrouten einen geeigneten Weg herauszufinden und das Flurförderzeug entlang dieses Weges zu führen.

Darüber hinaus ist es im Gegensatz zu den aus dem Stand der Technik bekannten fahrerlosen Transportsystemen nicht erforderlich, die zu manipulierende Palette bzw. die darauf befindliche Last zuvor in einer bestimmten Position im Raum exakt anzuordnen, da das Kontrollsystem die Position der Palette erfasst und zur Aufnahme der Palette den Bewegungsablauf der Gabel und/oder des Gabelstaplers dementsprechend und entsprechend der zuvor vorgegebenen Transportaufgabe anpaßt.

Das erfindungsgemäße Flurförderzeug ist daher in der Lage, selbständig Transport- und Lageraufgaben zu übernehmen, wobei es keiner Steuerung durch eine übergeordnete externe Überwachungs- oder Zentraleinheit bedarf.

Das Flurförderzeug ist daher ideal geeignet für die Lagerung und das Umsetzen von mittels Paletten stapelbaren Lasten. Typische Situationen hierfür sind der Bereich zwischen dem Ende einer Produktionslinie und einem Lager sowie der Bereich zwischen dem Lager und der Kommissionierzone, in der z.B. die Lasten für die Beladung eines Lastkraftwagens bereitgestellt werden.

Erfindungsgemäß ist das Kontrollsystem zur automatischen Verwaltung der Bewegungen von Paletten ausgebildet, die in mehreren Ebenen aufeinandergestapelt sind.

Die Transportaufgabe kann meist als Sequenz von Kommandos umschrieben werden:
- Definition des Stapels (kennzeichenbar durch eine Identifizier-Nummer), von dem Paletten mit Lasten aufgenommen werden sollen
- Anzahl der (nacheinander) aufzunehmenden und zu transportierenden Paletten
- Ausgangszustand des Stapels (z.B.: wie viele Stapelebenen, wo befindet sich die zuerst zu ladendende Palette, usw.)
- Definition des Zielortes oder der Zielorte und ihrer Identifizier-Nummern
- Ausgangszustand des Zielortes
- Anzahl der zu den einzelnen Zielorten zu transportierenden Paletten

Hierbei handelt es sich demnach um dieselbe Art von Information, die auch der Fahrer eines manuell bedienten Flurförderzeugs benötigt.

Neben dem vollautomatischen Betrieb kann zudem das erfindungsgemäße Flurförderzeug, sofern es beispielsweise als klassischer Gegengewichts-Gabelstapler ausgebildet ist, in der üblichen Art und Weise durch einen Fahrer manuell bedient werden, beispielsweise im Falle einer durch ein unvorhergesehenes Hindernis hervorgerufenen Fehlfunktion. Hierzu bedarf es lediglich der Betätigung eines Umschalteorgans zwischen automatischem und manuellem Betrieb.

Eine vorteilhafte Ausgestaltung der Erfindung sieht vor, daß die Mittel zum autonomen Bestimmen der Fahrzeugposition im Raum eine Odometrieanlage und eine Bildverarbeitungsanlage mit mindestens einer Navigationskamera enthalten. Ein solches System ermöglicht eine sehr genaue Positionsbestimmung des Gabelstaplers im Raum.

Hierbei liefern an den Antriebsrädern und/oder an gelenkten Rädern des Flurförderzeugs angeordnete odometrische Sensoren vom Startpunkt des Flurförderzeugs ausgehende Meßwerte, mit deren Hilfe die erreichte Position errechnet wird, gegebenenfalls unter Zuhilfenahme von Signalen eines Kreisels, der Winkelabweichungen des Fahrzeugs von einer Ausgangsposition erfaßt.

Zur Erhöhung der Genauigkeit ist eine optische Ortsbestimmung überlagert, die mit Hilfe von geometrischen Markierungen arbeitet, die von der Kamera erfaßt werden. Dieses System soll hier nicht näher erläutert werden. Es ist Gegenstand der nicht vorveröffentlichten, älteren italienischen Patentanmeldung MI94A002321, von der eine englische Übersetzung beigefügt ist, die zum Offenbarungsgehalt dieser Anmeldung zählt.

Zweckmäßigerweise ist die Navigationskamera auf der der Gabel gegenüberliegenden Seite des Flurförderzeugs in dessen oberen Bereich angeordnet, bei einem Gegengewichts-Gabelstapler im oberen Bereich des Fahrerschutzdaches.

Es erweist sich als günstig, wenn die Mittel zum Erkennen des Vorhandenseins, der Position und der Ausrichtung einer Palette eine Bildverarbeitungsanlage mit mindestens einer gabelseitig angeordneten, bewegungsgleich zur Gabel auf dem Flurförderzeugs befestigten Kamera enthalten.

Auf diese Weise ist es mit geringem Aufwand möglich, die für den automatischen Betrieb erforderliche Information hinsichtlich der zu manipulierenden Last zu erhalten. Ein solches System basiert auf der Identifizierung der an der Palette vorhandenen Einschuböffnungen für die Gabelzinken und ist Gegenstand der nicht vorveröffentlichten, älteren Europäischen Patentanmeldung 95202636.8, von der eine in englischer Sprache abgefaßte Kopie beigefügt ist, die zum Offenbarungsgehalt der vorliegenden Anmeldung zählt.

Sobald die für die Aufnahme der Last erforderliche Information über die Palette vorliegt, wird durch das Kontrollsystem das Flurförderzeug gegebenenfalls unter entsprechender Ausrichtung des Fahrzeugs und unter horizontaler und vertikaler Ausrichtung der Gabel in Richtung zur Last bewegt, d.h. in Richtung zur Palette, auf der sich die Last befindet.

Um sicherzustellen, daß die Palette korrekt aufgenommen wird, ist gemäß einer Weiterbildung der Erfindung mindestens ein an das Kontrollsystem angeschlossener Sensor (z.B. ein Mikroschalter oder etwas vergleichbares) zur Erfassung einer auf der Gabel angeordneten Palette vorgesehen.

Da die mit der Gabel bewegbare Kamera bewegungsgleich zur zur Gabel ist, wird sie durch die aufgenommene Last verdeckt. Deswegen ist es vorteilhaft, wenn gabelseitig ein an das Kontrollsystem angeschlossener Sensor, insbesondere ein Ultraschallsensor angeordnet ist, der zumindest bei angehobener Palette wirksam ist und durch den ohne vorherige Kenntnis der Lastposition im Raum die Gabelzinken in die Palette einführbar sind und die Last aufnehmbar oder absetzbar ist.

Durch den Sensor ist es möglich, die freie Strecke für beide Vorgänge, Aufnehmen und/oder Abladen der Palette, zu errechnen, insbesondere die Entfernung zu einer Wand oder einer bereits abgesetzten Palette. Die Absetz- und/oder Aufnahmeposition wird dann mit Hilfe der odometrischen Meßwerte ermittelt.

Für den automatischen Betrieb der Gabel erweist es sich als vorteilhaft, wenn odometrische Sensoren zur Ermittlung der Position der Neigung und/oder der Verschiebung und/oder des Hubs der Gabel vorgesehen sind.

Um die Gabel auch manuell auf einfachste Weise bedienen zu können, ist gemäß einer Ausgestaltung ein als Joystick ausgebildeter Handbedienungshebel, durch den eine Neigefunktion, eine Verschiebefunktion und eine Hubfunktion der Gabel ansteuerbar sind, zu deren manuellen Steuerung vorgesehen ist.

Wenn das erfindungsgemäße Flurförderzeug automatisch betrieben wird, sollten sich aus Sicherheitsgründen keine Personen in der Nähe aufhalten.

Um Kollisionen mit Personen zu vermeiden, die sich trotzdem im Bewegungsbereich des Flurförderzeugs aufhalten, sind an das Kontrollsystem angeschlossene Sensoren zur Feststellung des Vorhandenseins von Hindernissen oder Personen entlang der Fahrstrecke vorgesehen, insbesondere Infrarotsensoren.

Zweckmäßigerweise sind dabei front- und heckseitig mindestens jeweils zwei voneinander beabstandete, in Fahrtrichtung wirksame Sensoren, insbesondere Infrarotsensoren vorgesehen. Dadurch kann in beiden Fahrtrichtungen ein weiter Bereich überwacht werden.

Sobald eine Person durch die Infrarotsensoren detektiert wird, werden Maßnahmen zum Stillsetzen des Flurförderzeugs ergriffen.

Für Notfälle ist zweckmäßigerweise vorgesehen, daß bei Betriebsstörungen eine Negativ-Bremse (Totmann-Bremse) des Fahrzeugs und/oder eine Feststellbremse automatisch betätigbar sind.

Die Sicherheit wird weiter erhöht, wenn ein Anschlag am gabelfernen Ende des Flurförderzeugs angebracht ist, der in Wirkverbindung mit zumindest der Bremsanlage steht. Damit ist ein automatisches Stillsetzen des Fahrzeugs durch Berührung mit einer Person oder einem anderen Hindernis möglich.

Sofern das Kontrollsystem eine Ein-/Ausgabeeinheit zur Befehlseingabe, insbesondere eine Tastatur und eine Sichtanzeige als Schnittstelle zum Bediener aufweist, können auf einfache Weise Transportaufgaben definiert werden. Auch einzelne Bewegungsabläufe sind programmier- und abrufbar, um sodann automatisch abgearbeitet zu werden.

Um das Flurförderzeug mit minimalen Aufwand sowohl von Hand als auch automatisch lenken zu können, ist ein durch das Kontrollsystem direkt oder indirekt ansteuerbarer Aktuator zur Einwirkung auf die Lenkung des Flurförderzeugs im automatischen Betrieb vorgesehen. Dies kann beispielsweise ein Elektromotor sein, der mit einer Lenksäule eines als Gegengewichts-Gabelstapler ausgebildeten Flurförderzeugs verbunden ist.

Darüber hinaus ist es günstig, wenn das Kontrollsystem im automatischen Betrieb anstelle eines im manuellen Betrieb durch ein Fahrpedal erzeugten manuellen Geschwindigkeitssignal durch ein Ersatz-Geschwindigkeitssignal beaufschlagbar ist.

Eine größtmögliche Arbeitsgeschwindigkeit des erfindungsgemäß ausgestalteten Flurförderzeugs ergibt sich dadurch, daß die Fahrzeuggeschwindigkeit durch das Kontrollsystem in Abhängigkeit von der Kurvenkrümmung der Fahrstrecke regelbar ist.

Es versteht sich von selbst, daß das erfindungsgemäße Flurförderzeug nicht nur als klassischer Gegengewichts-Gabelstapler ausgestaltet sein kann, sondern als beliebiges Lagertechnikgerät. Darüber hinaus ist es auch möglich, als Basisgerät für das erfindungsgemäße Flurförderzeug ein "Fahrerloses Transportsystem" oder einen Industrieschlepper einzusetzen und dieses/diesen entsprechend der Erfindung auszubilden.

Neben dem eingangs erwähnten, vollkommen selbständigen Betrieb des erfindungsgemäßen Flurförderzeugs können derartige Fahrzeuge auch im Flottenbetrieb eingesetzt werden, d.h. geführt von einer zentralen Steuereinheit.

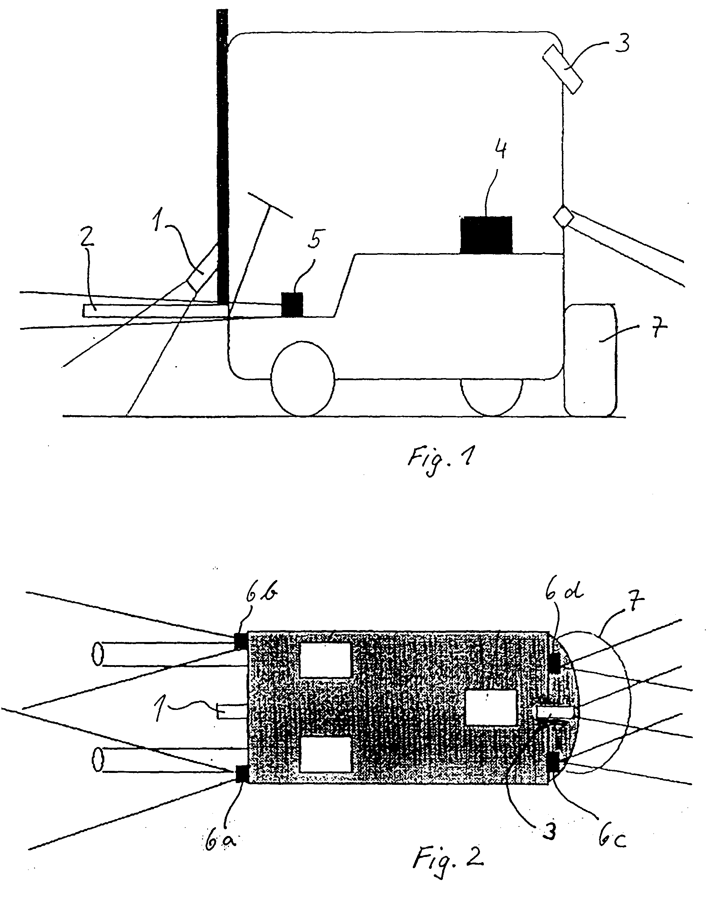

Weitere Vorteile und Einzelheiten der Erfindung werden anhand des in den schematischen Figuren dargestellten Ausführungsbeispieles näher erläutert. Dabei zeigt
- Figur 1: eine Seitenansicht eines als Gabelstaplers ausgebildeten Flurförder zeugs,
- Figur 2: eine Draufsicht auf den Gabelstapler,
- Figur 3: ein Prinzipschaltbild des Kontrollsystems,
- Figur 4a: eine Ansicht zweier gestapelter Paletten mit Last und
- Figur 4b: eine Draufsicht auf ein Lager.

Das erfindungsgemäße Flurförderzeug, das in diesem Ausführungsbeispiel als Gabelstapler ausgebildet und wahlweise manuell oder automatisch betreibbar ist, weist gabelseitig eine Kamera 1 auf, die bewegungsgleich zur Gabel 2 befestigt ist und dazu dient, das Vorhandensein, die Position und die Ausrichtung einer Palette zu detektieren. Mit Hilfe der Kamera 1 wird somit die für den automatischen Betrieb erforderliche Information hinsichtlich der zu manipulierenden Last erfaßt. Dabei werden als Informationsbasis die an einer Palette vorhandenen Einschuböffnungen für die Gabelzinken identifiziert.

Eine auf der gabelfernen Seite des Gabelstaplers im oberen Bereich von dessen Fahrerschutzdach angeordnete Navigationskamera 3 dient der Erfassung des räumlichen Position des Gabelstaplers. Hierbei werden geometrischen Markierungen (beispielsweise H-förmige Zeichen, die in dem zur Bewegung des Gabelstaplers vorgesehenen Raum verteilt angeordnet sind) und Umgebungsmerkmale von der Kamera erfaßt und mit Hilfe einer Bildverarbeitungsanlage zum autonomen Bestimmen der Fahrzeugposition im Raum benutzt.

Beide Kameras 1 und 3 sind an ein Kontrollsystem 4 angeschlossen, das in Wirkverbindung mit dem Fahrantrieb und/oder der Lenkung und/oder der Bremsanlage und/oder der Bewegungssteuerung der Gabel bringbar ist. Das Kontrollsystem 4 dient bei automatischem Betrieb des Gabelstaplers der Steuerung der Bewegung des Fahrzeugs in Abhängigkeit von dessen Position im Raum und von einer vorgegebenen Transportaufgabe. Darüber hinaus wird damit die Bewegung der Gabel und/oder des Fahrzeugs in Abhängigkeit von der Position, der Ausrichtung der Palette und der Transportaufgabe gesteuert.

Gabelseitig ist ein an das Kontrollsystem 4 angeschlossener Ultraschallsensor 5 angeordnet, der zumindest bei angehobener Palette wirksam ist und durch den das Vorhandensein von Hindernissen oder Personen entlang der Fahrstrecke erfaßt wird.

Um Kollisionen mit Personen zu vermeiden, die sich im Bewegungsbereich des automatisch betriebenen Gabelstaplers aufhalten, sind an das Kontrollsystem 4 angeschlossene Infrarotsensoren 6a, 6b, 6c und 6d zur Erfassung von Personen vorgesehen. Dabei sind front- und heckseitig jeweils zwei voneinander beabstandete, in Fahrtrichtung wirksame Infrarotsensoren 6a, 6b und 6c, 6d angeordnet. Dadurch kann in beiden Fahrtrichtungen ein weiter Bereich überwacht werden. Sobald eine Person durch eine der Infrarotsensoren 6a - 6d detektiert wird, werden Maßnahmen zum Stillsetzen des Gabelstaplers ergriffen.

Dabei sind bevorzugt zwei Erkennungszonen der Infrarotsensoren programmierbar. Die erste, weiter entfernte Erkennungszone bewirkt eine Geschwindigkeitsreduzierung des Fahrzeugs, wenn ein Objekt in der Zone geortet wird. Die zweite, nähere Erkennungszone veranlaßt einen Not-Halt des Fahrzeugs und ein akustisches Warnsignal.

Zusätzlich ist ein Anschlag 7 (Bumper) am gabelfernen Ende des Gabelstaplers angebracht, der in Wirkverbindung mit zumindest der Bremsanlage steht. Damit ist auch bei Ausfall der Infrarotsensoren 6a - 6d ein Stillsetzen des Fahrzeugs möglich, denn das gabelferne Ende stellt bei im Automatikbetrieb fahrendem Gabelstapler die Hauptfahrtrichtung dar.

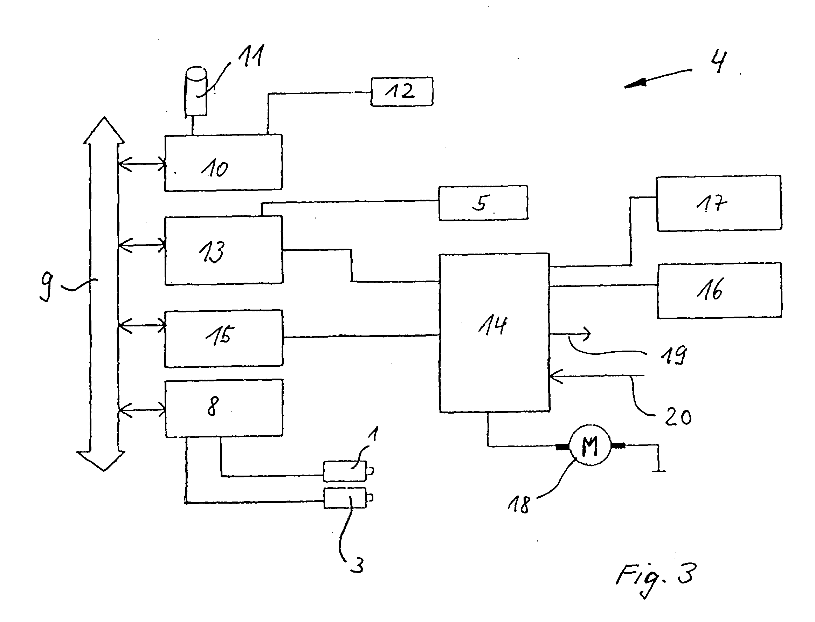

Ein Prinzipschaltbild des Kontrollsystems 4 ist aus Figur 3 ersichtlich. Die Kameras 1 und 3 sind an eine Bildverarbeitungsanlage 8 angeschlossen, die über einen geeigneten Datenaustausch-Bus 9 mit anderen, vorzugsweise modular aufgebauten Subsystemen des Kontrollsystems kommuniziert.

Basis des Kontrollsystems 4 ist ein an den Datenaustausch-Bus 9 angeschlossener Rechner 10, der vorzugsweise als Industrie-PC ausgebildet ist und mit einem Speicher 11 sowie einer Ein-/Ausgabeeinheit 12 in Verbindung steht. In dem Speicher 11 befinden sich die Angaben zur Umgebung des Gabelstaplers und mögliche Fahrtrouten. Mit Hilfe der Ein-/Ausgabeeinheit 12 wird eine Transportaufgabe definiert.

Ein kombiniertes Navigations-/Steuermodul 13 verarbeitet die Signale aller Navigationssensoren, also der an den Antriebsrädern und an den gelenkten Rädern des Gabelstaplers angeordneten odometrischen Sensoren und der Kameras 1 und 3 sowie des Ultraschallsensors 5, und steuert den Fahrantrieb und/oder die Lenkung und/oder die Bremsanlage. Zu diesem Zweck steht sie mit einer elektronischen Baueinheit 14 in Verbindung, die die Fahr- und Arbeitsfunktionen des Gabelstaplers bestimmt.

Von dem Navigations-/Steuermodul 13 unabhängig arbeitet ein Gabelsteuermodul 15, das ebenfalls mit der elektronischen Baueinheit 14 in Verbindung steht und an das die zur Sicherstellung einer korrekten Aufnahme der Palette vorgesehenen, auf der Gabel angeordneten Mikroschalter angeschlossen sind.

An die elektronische Baueinheit 14 ist ein Bedienpanel 16 des Gabelstaplers, ein hydraulisches Steuersystem 17 für die Gabel und ein mit der Lenksäule des Gabelstaplers verbundene Elektromotor 18 angeschlossen. Darüber hinaus weist sie eine Verbindung 19 zu einem Notbremsrelais auf und einen Anschluß 20 für fahrzeuginterne Sensoren.

Durch das bordeigene Kontrollsystem 4 ist der erfindungsgemäß ausgestaltete Gabelstapler in der Lage, frei im Raum zu navigieren. In Abhängigkeit von der durch die Ein-/Ausgabeeinheit 12 vorgegebenen Transportaufgabe und der mittels der Odometrieanlage und der an die Bildverarbeitungsanlage 8 angeschlossenen Kamera 3 festgestellten Fahrzeugposition im Raum, findet das Kontrollsystem 4 unter den im Speicher 11 registrierten Fahrtrouten einen geeigneten Weg und führt den Gabelstapler mittels des Navigations-/Steuermoduls 13 entlang dieses Weges.

Durch das Kontrollsystem 4 wird darüber hinaus mittels der an die Bildverarbeitungsanlage 8 angeschlossenen Kamera 1 das Vorhandensein und die Position einer zu manipulierenden Palette erfaßt und zur Aufnahme der Palette der Bewegungsablauf der Gabel mittels des Gabelsteuermoduls 15 gesteuert und gegebenenfalls zusätzlich mittels des Navigations-/Steuermoduls 13 der Bewegungsablauf des Gabelstaplers.

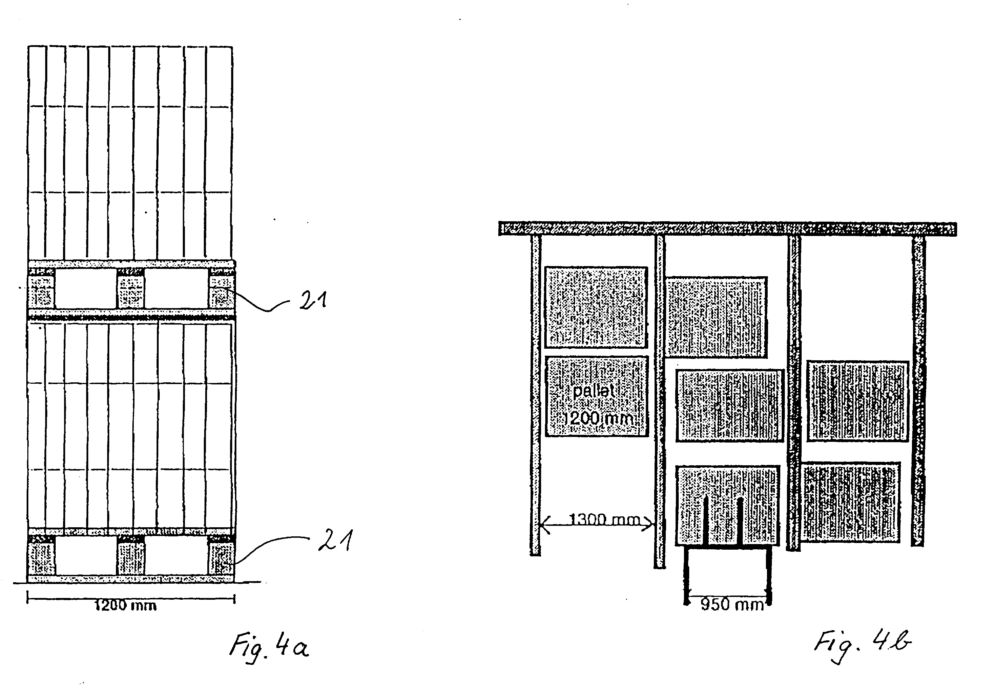

Es ist dabei nicht erforderlich, daß die zu manipulierende Palette bzw. die darauf befindliche Last in einer exakten vorbestimmten Position im Raum angeordnet ist. So zeigt Figur 4b ein Lager mit drei Buchten, wobei die Buchten jeweils deutlich breiter sind (in diesem Beispiel 1300 mm) als die Breite einer Palette 21 (1200 mm). In der mittleren und der rechten Bucht sind Paletten 21 mit darauf befindlichen Lasten willkürlich angeordnet, d.h. ungleichmäßig bezüglich der Querabmessungen der Gassen. Herkömmliche fahrerlose Transportsysteme sind nicht in der Lage, diese Lasten aufzunehmen. Der erfindungsgemäße Gabelstapler, der in diesem Ausführungsbeispiel eine Breite von 950 mm aufweist, ermöglicht einen automatischen Betrieb, bei dem beispielsweise die in der mittleren und der rechten Bucht befindlichen Paletten gleichmäßig in der linken Bucht gestapelt werden (siehe auch Figur 4a).

Der erfindungsgemäße Gabelstapler ist somit in der Lage, nicht nur durch einen Fahrer manuell bedient zu werden, sondern selbständig Transport- und Lageraufgaben zu übernehmen, wobei es keiner Steuerung durch eine übergeordnete externe Überwachungs- oder Zentraleinheit bedarf.

## Patentansprüche

1. Flurförderzeug, insbesondere Gegengewichts-Gabelstapler, das wahlweise manuell oder automatisch betreibbar ist und mit einen Fahrantrieb, mit einer Lenkung, mit einer Bremsanlage und mit einer Gabel zur Handhabung von Paletten und darauf befindlichen Lasten versehen ist, wobei für den manuellen Betrieb der Fahrantrieb durch ein manuell erzeugtes Geschwindigkeitssignal steuerbar, die Lenkung manuell betätigbar und die Gabel manuell bedienbar ist, **dadurch gekennzeichnet**, daß das Flurförderzeug für den automatischen Betrieb mit einem in Wirkverbindung mit dem Fahrantrieb, der Lenkung, der Bremsanlage und der Bewegungssteuerung der Gabel bringbaren Kontrollsystem (4) ausgestattet ist, das Mittel zum Eingeben und Speichern von möglichen Fahrtrouten und einer Transportaufgabe, Mittel zum autonomen Bestimmen der Fahrzeugposition im Raum, Mittel zur Steuerung der Bewegung des Fahrzeugs in Abhängigkeit von dessen Position im Raum und von der vorgegebenden Transportaufgabe, Mittel zum Erkennen des Vorhandenseins, der Position und der Ausrichtung einer Palette (21), Mittel zur Steuerung der Bewegung der Gabel (2) und/oder des Fahrzeugs in Abhängigkeit von der Position, der Ausrichtung der Palette und der Transportaufgabe und Mittel zum Abbremsen des Fahrzeugs beim Vorhandensein von Hindernissen aufweist.

2. Flurförderzeug nach Anspruch 1, **dadurch gekennzeichnet**, daß das Kontrollsystem (4) zur automatischen Verwaltung der Bewegungen von Paletten (21), die in mehreren Ebenen aufeinandergestapelt sind, ausgebildet ist.

3. Flurförderzeug nach Anspruch 1 oder 2, **dadurch gekennzeichnet**, daß die Mittel zum autonomen Bestimmen der Fahrzeugposition im Raum eine Odometrieanlage und eine Bildverarbeitungsanlage (8) mit mindestens einer Navigationskamera (3) enthalten.

4. Flurförderzeug nach Anspruch 3, **dadurch gekennzeichnet**, daß die Navigationskamera (3) auf der der Gabel gegenüberliegenden Seite des Flurförderzeugs in dessen oberen Bereich angeordnet ist.

5. Flurförderzeug nach einem der Ansprüche 1 bis 4, **dadurch gekennzeichnet**, daß die Mittel zum Erkennen des Vorhandenseins, der Position und der Ausrichtung einer Palette (21) eine Bildverarbeitungsanlage (8) mit mindestens einer gabelseitig angeordneten, bewegungsgleich zur Gabel (2) auf dem Flurförderzeug befestigten Kamera (1) enthalten.

6. Flurförderzeug nach einem der Ansprüche 1 bis 5, **dadurch gekennzeichnet**, daß mindestens ein an das Kontrollsystem (4) angeschlossener Sensor zur Erfassung einer auf der Gabel (2) angeordneten Palette (21) vorgesehen ist.

7. Flurförderzeug nach einem der Ansprüche 1 bis 6, **dadurch gekennzeichnet**, daß gabelseitig ein an das Kontrollsystem (4) angeschlossener Sensor, insbesondere ein Ultraschallsensor (5) angeordnet ist, der zumindest bei angehobener Palette (21) wirksam ist und durch den ohne vorherige Kenntnis der Lastposition im Raum die Gabelzinken in die Palette einführbar sind und die Last aufnehmbar ist.

8. Flurförderzeug nach einem der Ansprüche 1 bis 7, **dadurch gekennzeichnet**, daß odometrische Sensoren zur Ermittlung der Position der Neigung und/oder der Verschiebung und/oder des Hubs der Gabel für deren automatischen Betrieb vorgesehen sind.

9. Flurförderzeug nach einem Ansprüche 1 bis 8, **dadurch gekennzeichnet**, daß ein als Joystick ausgebildeter Handbedienungshebel, durch den eine Neigefunktion, eine Verschiebefunktion und eine Hubfunktion der Gabel ansteuerbar sind, zu deren manuellen Steuerung vorgesehen ist.

10. Flurförderzeug nach einem der Ansprüche 1 bis 9, **dadurch gekennzeichnet,** daß an das Kontrollsystem (4) angeschlossene Sensoren zur Feststellung des Vorhandenseins von Hindernissen oder Personen entlang der Fahrstrecke vorgesehen sind, insbesondere Infrarotsensoren (6a-6d).

11. Flurförderzeug nach Anspruch 10, **dadurch gekennzeichnet**, daß front- und heckseitig mindestens jeweils zwei voneinander beabstandete, in Fahrtrichtung wirksame Sensoren, insbesondere Infrarotsensoren (6a, 6b und 6c, 6d) vorgesehen sind.

12. Flurförderzeug nach einem der Ansprüche 1 bis 11, **dadurch gekennzeichnet**, daß bei Betriebsstörungen eine Negativ-Bremse (Totmann-Bremse) des Fahrzeugs und/oder eine Feststellbremse automatisch betätigbar sind.

13. Flurförderzeug nach einem der Ansprüche 1 bis 12, **dadurch gekennzeichnet**, daß ein Anschlag (7) am gabelfernen Ende des Flurförderzeugs angebracht ist, der in Wirkverbindung mit zumindest der Bremsanlage steht.

14. Flurförderzeug nach einem der Ansprüche 1 bis 13, **dadurch gekennzeichnet**, daß das Kontrollsystem (4) eine Ein-/Ausgabeeinheit (12) zur Befehlseingabe, insbesondere eine Tastatur und eine Sichtanzeige als Schnittstelle zum Bediener aufweist.

15. Flurförderzeug nach einem der Ansprüche 1 bis 14, **dadurch gekennzeichnet**, daß ein durch das Kontrollsystem (4) direkt oder indirekt ansteuerbarer Aktuator zur Einwirkung auf die Lenkung des Flurförderzeugs in automatischen Betrieb vorgesehen ist.

16. Flurförderzeug nach einem der Ansprüche 1 bis 15, **dadurch gekennzeichnet**, daß das Kontrollsystem im automatischen Betrieb anstelle eines im manuellen Betrieb durch ein Fahrpedal erzeugten manuellen Geschwindigkeitssignal durch ein Ersatz-Geschwindigkeitssignal beaufschlagbar ist.

17. Flurförderzeug nach einem der Ansprüche 1 bis 16, **dadurch gekennzeichnet**, daß die Fahrzeuggeschwindigkeit durch das Kontrollsystem in Abhängigkeit von der Kurvenkrümmung der Fahrstrecke regelbar ist.

## Claims

1. Industrial truck, in particular counterbalanced fork-lift truck, which can be operated optionally manually or automatically and is provided with a travelling drive, with steering, with a braking system and with a fork for handling pallets and loads located thereon, it being possible, for manual operation, for the travelling drive to be controlled by a manually produced speed signal, for the steering to be actuated manually and for the fork to be operated manually, characterized in that the industrial truck, for automatic operation, is equipped with a control system (4) which can be brought into operative connection with the travelling drive, the steering, the braking system and the movement-control means for the fork and has means for inputting and storing possible travel routes and a transporting task, means for autonomously determining the vehicle position in space, means for controlling the movement of the vehicle in dependence on its position in space and on the predetermined transporting task, means for detecting the presence, the position and the alignment of a pallet (21), means for controlling the movement of the fork (2) and/or of the vehicle in dependence on the position and the alignment of the pallet and the transporting task, and means for braking the vehicle in the presence of obstructions.

2. Industrial truck according to Claim 1, characterized in that the control system (4) is designed for automatically controlling the movements of pallets (21), which are stacked in a number of planes one above the other.

3. Industrial truck according to Claim 1 or 2, characterized in that the means for autonomously determining the vehicle position in space contain an odometry system and an image-processing system (8) with at least one navigational camera (3).

4. Industrial truck according to Claim 3, characterized in that the navigational camera (3) is arranged in the top region of the industrial truck, on the side of the latter which is located opposite the fork.

5. Industrial truck according to one of Claims 1 to 4, characterized in that the means for detecting the presence, the position and the alignment of a pallet (21) contain an image-processing system (8) with at least one camera (1) which is arranged on the fork side and is fastened on the industrial truck such that it moves with the fork (2).

6. Industrial truck according to one of Claims 1 to 5, characterized in that there is provided at least one sensor which is connected to the control system (4) and is intended for sensing a pallet (21) arranged on the fork (2).

7. Industrial truck according to one of Claims 1 to 6, characterized in that arranged on the fork side is a sensor, in particular an ultrasonic sensor (5), which is connected to the control system (4), is active at least when the pallet (21) is raised and by means of which, without prior knowledge of the load position in space, the fork tines can be introduced into the pallet and the load can be received.

8. Industrial truck according to one of Claims 1 to 7, characterized in that there are provided odometric sensors for determining the position the inclination and/or the displacement and/or the lift of the fork for automatic operation of the latter.

9. Industrial truck according to one of Claims 1 to 8, characterized in that there is provided a hand-operated lever which is designed as a joystick and by means of which it is possible to activate an inclining function, a displacement function and a lifting function of the fork, for manual control of the latter.

10. Industrial truck according to one of Claims 1 to 9, characterized in that there are provided sensors, in particular infrared sensors (6a-6d), which are connected to the control system (4) and are intended for establishing the presence of obstructions or individuals along the travel path.

11. Industrial truck according to Claim 10, characterized in that provided at the front and rear are at least in each case two spaced-apart sensors, in particular infrared sensors (6a, 6b and 6c, 6d), which act in the direction of travel.

12. Industrial truck according to one of Claims 1 to 11, characterized in that, in the event of operation being disrupted, a negative brake (dead man's brake) of the vehicle and/or a parking brake can be actuated automatically.

13. Industrial truck according to one of Claims 1 to 12, characterized in that a stop (7) is provided at that end of the industrial truck which is remote from the fork, and said stop is in operative connection with at least the braking system.

14. Industrial truck according to one of Claims 1 to 13, characterized in that the control system (4) has an input/output unit (12) for inputting commands, in particular a keyboard and a display as an interface with the operator.

15. Industrial truck according to one of Claims 1 to 14, characterized in that there is provided an actuator which can be activated directly or indirectly by the control system (4) and is intended for acting on the steering of the industrial truck in automatic operation.

16. Industrial truck according to one of Claims 1 to 15, characterized in that in automatic operation, instead of a manual speed signal produced by an accelerator pedal in manual operation, the control system can be activated by a replacement speed signal.

17. Industrial truck according to one of Claims 1 to 16, characterized in that the vehicle speed can be regulated by the control system in dependence on the curvature of the travel path.

## Revendications

1. Chariot de manutention, en particulier chariot élévateur à fourche à contrepoids, utilisable au choix en mode automatique ou manuel, pourvu d'un entraînement de roulement, avec une direction, avec un dispositif de freinage et avec une fourche pour la manipulation de palettes et de charges s'y trouvant, dans lequel, pour le fonctionnement manuel, l'entraînement de roulement peut être commandé par un signal de vitesse généré manuellement, la direction peut être actionnée manuellement et la fourche peut être utilisée manuellement, **caractérisé en ce que** le chariot de manutention est équipé, pour le fonctionnement automatique, d'un système de contrôle (4) pouvant être amené en coopération avec l'entraînement de roulement, la direction, le dispositif de freinage et la commande du mouvement de la fourche, qui présente des moyens pour l'entrée et la mémorisation de trajectoires de déplacement possibles et d'un programme de transport, des moyens pour déterminer de manière autonome la position du véhicule dans l'espace, des moyens pour commander le mouvement du véhicule en fonction de sa position dans l'espace et du programme de transport préétabli, des moyens pour reconnaître la présence, la position et l'orientation d'une palette (21), des moyens pour commander le mouvement de la fourche (2) et/ou du véhicule en fonction de la position, de l'orientation de la palette et du programme de transport, et des moyens de freinage du véhicule en présence d'obstacles.

2. Chariot de manutention selon la revendication 1, **caractérisé en ce que** le système de contrôle (4) est conçu pour la gestion automatique des mouvements de palettes (21), qui sont empilées dans plusieurs plans.

3. Chariot de manutention selon la revendication 1 ou 2, **caractérisé en ce que** les moyens pour la détermination autonome de la position du véhicule dans l'espace contiennent un dispositif d'odométrie et un dispositif de traitement d'images (8) avec au moins une caméra de navigation (3).

4. Chariot de manutention selon la revendication 3, **caractérisé en ce que** la caméra de navigation (3) est disposée du côté du chariot de manutention opposé à la fourche dans sa partie supérieure.

5. Chariot de manutention selon l'une quelconque des revendications 1 à 4, **caractérisé en ce que** les moyens pour reconnaître la présence, la position et l'orientation d'une palette (21) contiennent un dispositif de traitement d'image (8) ayant au moins une caméra (1) fixée au chariot de manutention, disposée du côté de la fourche, de même mouvement que la fourche (2).

6. Chariot de manutention selon l'une quelconque des revendications 1 à 5, **caractérisé en ce qu**'au moins un détecteur raccordé au système de contrôle (4) est prévu pour détecter une palette (21) disposée sur la fourche (2).

7. Chariot de manutention selon l'une quelconque des revendications 1 à 6, **caractérisé en ce que** du côté de la fourche, est disposé un détecteur raccordé au système de contrôle (4), en particulier un détecteur à ultrasons (5), qui est actif au moins lorsqu'une palette (21) est soulevée et par le biais duquel les dents de la fourche peuvent être avancées dans la palette sans connaissance préalable de la position de la charge dans l'espace et la charge peut être reçue.

8. Chariot de manutention selon l'une quelconque des revendications 1 à 7, **caractérisé en ce que** des détecteurs odométriques pour déterminer la position de l'inclinaison et/ou du déplacement et/ou du levage de la fourche sont prévus pour son fonctionnement automatique.

9. Chariot de manutention selon l'une quelconque des revendications 1 à 8, **caractérisé en ce qu**'il est prévu un levier de manipulation conçu en forme de levier de commande, par l'intermédiaire duquel une fonction d'inclinaison, une fonction de déplacement et une fonction de levage de la fourche peuvent être commandées, pour sa commande manuelle.

10. Chariot de manutention selon l'une quelconque des revendications 1 à 9, **caractérisé en ce que** des détecteurs raccordés au système de contrôle (4) sont prévus pour établir la présence d'obstacles ou de personnes le long de la trajectoire de déplacement, en particulier des détecteurs infrarouge (6a-6d).

11. Chariot de manutention selon la revendication 10, **caractérisé en ce que** l'on prévoit, du côté avant et arrière, à chaque fois au moins deux détecteurs agissant dans la direction d'avance et espacés l'un de l'autre, en particulier des détecteurs infrarouge (6a, 6b et 6c, 6d) .

12. Chariot de manutention selon l'une quelconque des revendications 1 à 11, **caractérisé en ce qu**'en cas de problèmes de fonctionnement, un frein négatif (ou frein automatique d'homme mort) du véhicule et/ou un frein d'immobilisation sont actionnables automatiquement.

13. Chariot de manutention selon l'une quelconque des revendications 1 à 12, **caractérisé en ce qu**'une butée (7) est montée à l'extrémité éloignée de la fourche du chariot de manutention, laquelle coopère avec au moins le dispositif de freinage.

14. Chariot de manutention selon l'une quelconque des revendications 1 à 13, **caractérisé en ce que** le système de contrôle (4) présente une unité d'entrée/sortie (12) pour l'entrée d'ordres, en particulier un clavier et un écran visuel en tant qu'interface pour l'utilisateur.

15. Chariot de manutention selon l'une quelconque des revendications 1 à 14, **caractérisé en ce qu**'un actionneur pouvant être commandé directement ou indirectement par le système de contrôle (4) est prévu pour agir sur la direction du chariot de manutention en fonctionnement automatique.

16. Chariot de manutention selon l'une quelconque des revendications 1 à 15, **caractérisé en ce que** le système de contrôle peut être sollicité en fonctionnement automatique au lieu d'un signal de vitesse manuel généré par une pédale de conduite en fonctionnement manuel par un signal de vitesse de remplacement.

17. Chariot de manutention selon l'une quelconque des revendications 1 à 16, **caractérisé en ce que** la vitesse du véhicule est ajustable par le système de contrôle en fonction de la courbure de la trajectoire de conduite.
